# EUROPÄISCHE PATENTANMELDUNG

(11) **EP 0 780 959 A2**
(43) Veröffentlichungstag der Anmeldung: **25.06.1997**
(21) Anmeldenummer: 96119630.0
(22) Anmeldetag: 06.12.1996
(51) Int. Cl.: H02M 5/45

(54) **Stromrichteranordnung mit gekoppelten Spannungs-Zwischenkreisen**

(30) Priorität: 19.12.1995 DE 19547465
(71) Anmelder: SIEMENS AKTIENGESELLSCHAFT, 80333 München (DE)
(72) Erfinder: Budig, Olaf, Dipl.-Ing., 91056 Erlangen (DE); Grabosch, Volker, Dipl.-Ing., 91056 Erlangen (DE)

(57) **Zusammenfassung**

Die Erfindung bezieht sich auf eine Stromrichteranordnung mit zwei Pulsumrichtern (6,8), die jeweils eine Einspeiseschaltung (10,12), einen eine Kondensatorbatterie (C_{ZK1},C_{ZK2}) aufweisenden Spannungs-Zwischenkreis (2,4) und einen Pulswechselrichter (14,16) aufweisen, wobei die Plus- und Minuspole der beiden Spannungs-Zwischenkreise (2,4) jeweils über eine einen Schalter (22,24) aufweisende Verbindungsleitung (26,28) miteinander elektrisch leitend verbunden sind und wobei elektrisch parallel zu den Kondensatorbatterien (C_{ZK1},C_{ZK2}) ein einen Kondensator (C_{SK}) und eine dazu in Reihe geschaltete Induktivität (L_{SK}) aufweisender Saugkreis (30) angeordnet ist. Erfindungsgemäß ist zwischen dem Pluspol des einen Spannungs-Zwischenkreises (2) und dem Minuspol des anderen Spannungs-Zwischenkreises (4) angeordnet. Somit erhält man eine Stromrichteranordnung, bei der auf nicht erforderliche Redundanzen verzichtet werden kann und Kurzschlüsse freigeschaltet werden können.

## Beschreibung

Die Erfindung bezieht sich auf eine Stromrichteranordnung gemäß dem Oberbegriff des Anspruchs 1.

Derartige Stromrichteranordnungen werden z.B. bei Traktionsantrieben eingesetzt. Bei Hochleistungs-Triebfahrzeugen, z.B. Universallokomotiven oder Hochgeschwindigkeits-Triebköpfen, ist jedem Drehgestell eine derartige Stromrichteranordnung zugeordnet. Jeder Pulswechselrichter speist einen Motor eines Drehgestells. Als Einspeiseschaltung sind jeweils ein Vierquadrantensteller vorgesehen, wodurch Energie beim Bremsen ins Netz zurückgespeist werden kann und der Leistungsfaktor nahe 1 ist. Die Stromrichteranordnung wird bei einem Wechselstromnetz über einen Transformator und bei einem Gleichspannungsnetz direkt über den Stromabnehmer gespeist. Zur Erhöhung der Zuverlässigkeit der beiden Pulsumrichter sind die beiden Spannungs-Zwischenkreise miteinander verkoppelt.

Unabhängig von der Verschaltung der einzelnen Pulswechselrichter bzw. Einspeiseschaltungen führt ein Kurzschluß (z.B. Durchlegieren von Halbleiter-Elementen) in der Stromrichteranordnung dazu, daß die verkoppelten Spannungs-Zwischenkreise getrennt werden, so daß die Stromrichteranordnung in Betrieb bleiben kann.

Bei einer Lokomotive, bei der beide Fahrmotoren je Drehgestell über eine Stromrichteranordnung gespeist werden, beispielsweise gemäß dem Bild 6 der Veröffentlichung mit dem Titel "Lokomotiven-Familie Eco2000 - ein modulares Konzept mit Zukunft", abgedruckt in der Firmen-Zeitschrift "ABB Technik", Heft 8, 1995, Seiten 4 bis 11, besteht die Möglichkeit, Kurzschlüsse freizuschalten. Die in diesem Bild dargestellte Schaltung ist so ausgelegt, daß bei Fehlern in den Traktions-Stromkreisen in der Regel noch 75 % der Fahrzeugleistung zur Verfügung stehen. Bei der dargestellten Stromrichteranordnung sind die Pole der beiden Spannungs-Zwischenkreise jeweils mittels zweier Schalter miteinander verbunden.

Eine Stromrichteranordnung gemäß dem Oberbegriff des Anspruchs 1 ist aus der EP 0 514 580 A1 bekannt. Auch diese Schaltung ist so ausgelegt, daß bei Fehlern in den Traktion-Stromkreisen in der Regel noch 75 % der Fahrzeugleistung zur Verfügung stehen. Zur Freischaltung von Kurzschlüssen werden hier nur zwei Schalter benötigt.

Bei den genannten Stromrichteranordnungen ist in jedem Spannungs-Zwischenkreis eine Schutz-, Überwachungs- und Sicherheitseinrichtung angeordnet. Ein Teil dieser Einrichtung wird dabei in einer nicht erforderliche Redundanz verwendet. Diese nicht erforderliche Redundanz von Teilen der Schutz-, Überwachungs- und Sicherheitseinrichtung benötigt einen Teil des Stromrichterschrankes, erhöht das Gewicht des Traktions-Stromrichters und verteuert diesen.

Außerdem besteht bei der Stromrichteranordnung nach EP 0 514 580 A1 keine Möglichkeit, Erdschlüsse freizuschalten.

Der Erfindung liegt nun die Aufgabe zugrunde, eine Kopplung von Spannungs-Zwischenkreisen einer eingangs genannten Stromrichteranordnung anzugeben, bei der auf nicht erforderliche Redundanzen verzichtet wird.

Diese Aufgabe wird erfindungsgemäß gelöst mit dem Merkmal des Anspruchs 1.

Dadurch, daß die Schutz-, Überwachungs- und Sicherheitseinrichtung elektrisch parallel zu dem vorhandenen Saugkreis geschaltet ist, steht im Normalbetrieb diese Einrichtung den beiden gekoppelten Spannungs-Zwischenkreisen zur Verfügung.

Wenn im Fehlerfall ein Pulsumrichter abgeschaltet werden muß, so wird nur ein zweipoliger Schalter geöffnet. Der Saugkreis und die Schutz-, Überwachungs- und Sicherheitseinrichtung ist durch den zweiten zweipoligen Schalter weiterhin elektrisch parallel zur Zwischenkreis-Batterie des intakten Pulsumrichters geschaltet.

Durch diese erfindungsgemäße Anordnung einer Schutz-, Überwachungs- und Sicherheitseinrichtung können das Bauvolumen, das Gewicht und die Kosten des Traktions-Umrichters vermindert werden.

Bei einer vorteilhaften Ausführungsform ist jeweils zwischen dem Pluspol des einen Spannungs-Zwischenkreises und der Schutz-, Überwachungs- und Sicherheitseinrichtung und zwischen der Schutz-, Überwachungs- und Sicherheitseinrichtung und dem Minuspol des anderen Spannungs-Zwischenkreises jeweils ein Schalter angeordnet, die zusammen mit den Schaltern in den Verbindungsleitungen der Pole der beiden Spannungs-Zwischenkreise betätigbar sind.

Durch die vorteilhafte Weiterbildung der erfindungsgemäßen Kopplung zweier Spannungs-Zwischenkreise einer Stromrichteranordnung besteht nun die Möglichkeit, daß auftretende Erdschlüsse freigeschaltet werden können. Der Saugkreis und die Schutz-, Überwachungs- und Sicherheitseinrichtung sind durch die zweite Schalterkombination weiterhin elektrisch parallel zur Zwischenkreis-Batterie des intakten Pulsumrichters geschaltet.

Zur weiteren Erläuterung der Erfindung wird auf die Zeichnung Bezug genommen, in der Ausführungsformen einer erfindungsgemäßen Stromrichteranordnung schematisch veranschaulicht sind.
- Figur 1: zeigt eine erste Ausführungsform der erfindungsgemäßen Kopplung zweier Spannungs-Zwischenkreise einer Stromrichteranordnung und in
- Figur 2: ist eine vorteilhafte Ausführungsform der erfindungsgemäßen Kopplung dargestellt.

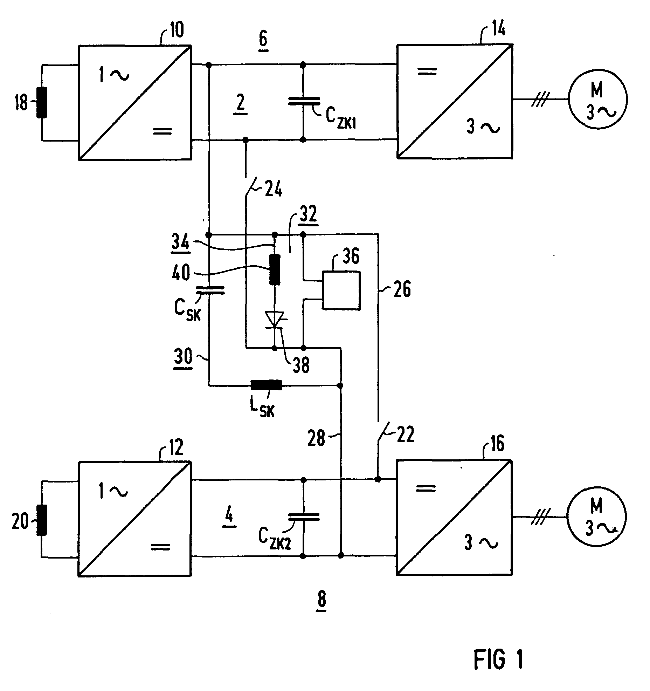

In Figur 1 ist eine erste Ausführungsform einer Stromrichteranordnung mit einer erfindungsgemäßen Kopplung zweier Spannungs-Zwischenkreise 2 und 4 dargestellt. Diese Stromrichteranordnung weist zwei Pulswechselrichter 6 und 8 auf, die jeweils eine Einspeiseschaltung 10 bzw. 12, beispielsweise einen Vierquadranten-Steller, einen Spannungs-Zwischenkreis 2 bzw. 4, die jeweils eine Kondensatorbatterie C_{ZK1} bzw. C_{ZK2} enthalten, und einen Pulswechselrichter 14 bzw. 16. Eingangsseitig weisen die Einspeiseschaltungen 10 und 12 jeweils eine Wicklung 18 und 20 auf, die Sekundärwicklungen eines nicht näher dargestellten Traktions-Transformators sind. An den Ausgängen der Pulswechselrichter 14 und 16 ist jeweils ein Induktionsmotor, insbesondere ein Asynchronmotor, angeschlossen. Die Plus- und Minuspole der beiden Spannungs-Zwischenkreise 2 und 4 sind jeweils über einen Schalter 22 und 24 miteinander verbindbar, wobei diese Schalter 22 und 24 jeweils in einer Verbindungsleitung 26 bzw. 28 angeordnet sind. Außerdem ist elektrisch parallel zu den beiden Kondensatorbatterien C_{ZK1} und C_{ZK2} ein Saugkreis 30 geschaltet, der einen Kondensator C_{SK} und eine Induktivität L_{SK} aufweist. Elektrisch parallel zu diesem Saugkreis 30 ist eine Schutz-, Überwachungs- und Sicherheitseinrichtung 32 geschaltet. Diese Schutz-, Überwachungs- und Sicherheitseinrichtung 32 weist beispielsweise einen Kurzschließer 34 und eine Erdschlußerfassungseinrichtung 36 auf. Außerdem beinhaltet die Einrichtung 32 noch eine Betätigungseinrichtung für die Schalter 22 und 24, die aus Übersichtlichkeitsgründen nicht dargestellt ist. Der Kurzschließer 34 weist einen Leistungsschalter 38 und eine Strombegrenzungsdrossel 40 auf. Nicht dargestellt ist die Ansteuervorrichtung des Leistungsschalter 38. Dieser Kurzschließer 34 benötigt ein angemessenes Bauvolumen und ist kostenintensiv. Durch die erfindungsgemäße Kopplung der beiden Spannung-Zwischenkreise 2 und 4 der Stromrichteranordnung wird ein Kurzschließer 34 eingespart, wodurch sich das Bauvolumen und die Kosten der Stromrichteranordnung verringern.

Im Normalbetrieb sind die Schalter 22 und 24 geschlossen. Die beiden Kondenatorbatterien C_{ZK1} und C_{ZK2} mit den angeschlossenen Einspeiseschaltungen 10 und 12 und den Pulswechselrichtern 14 und 16 sind dann elektrisch parallel geschaltet. Zu den Kondensatorbatterien C_{ZK1} und C_{ZK2} sind dann auch der Saugkreis 30 und die Schutz-, Überwachungs- und Sicherheitseinrichtung 32 elektrisch parallel geschaltet. Tritt nun ein Störfall ein, z.B. Kurzschluß im Zwischenkreis 2 des Pulsumrichters 6, so wird der Schalter 24 geöffnet. Dieser Kurzschluß wird mittels der Erdschlußerfassungseinrichtung 36 erfaßt und mittels der nicht dargestellten Betätigungseinrichtung in eine Schalthandlung für den Schalter 24 umgesetzt. Dadurch ist der Pulsumrichter 6 außer Betrieb. Der Saugkreis 30 und die Schutz-, Überwachungs- und Sicherheitseinrichtung 32 sind weiterhin über den Schalter 22 elektrisch parallel zur Kondensatorbatterie C_{ZK2} des Pulsumrichters 8 geschaltet. Der Spannungs-Zwischenkreis 2 liegt nun einpolig auf dem Potential des Pluspols des Spannungs-Zwischenkreises 4 des intakten Pulsumrichters 8.

Tritt ein Störfall im Zwischenkreis 4 des Pulsumrichters 8 auf, so wird der Schalter 22 geöffnet. Dadurch ist der Pulsumrichter 8 außer Betrieb. Der Saugkreis 30 und die Schutz-, Überwachungs- und Sicherheitseinrichtung 32 sind weiterhin über den Schalter 24 elektrisch parallel zur Kondensatorbatterie C_{ZK1} des Pulsumrichters 6 geschaltet. Der Spannungszwischenkreis 4 liegt nun einpolig auf dem Potential des Minuspols des Spannungs-Zwischenkreises 2 des intakten Pulsumrichters 6.

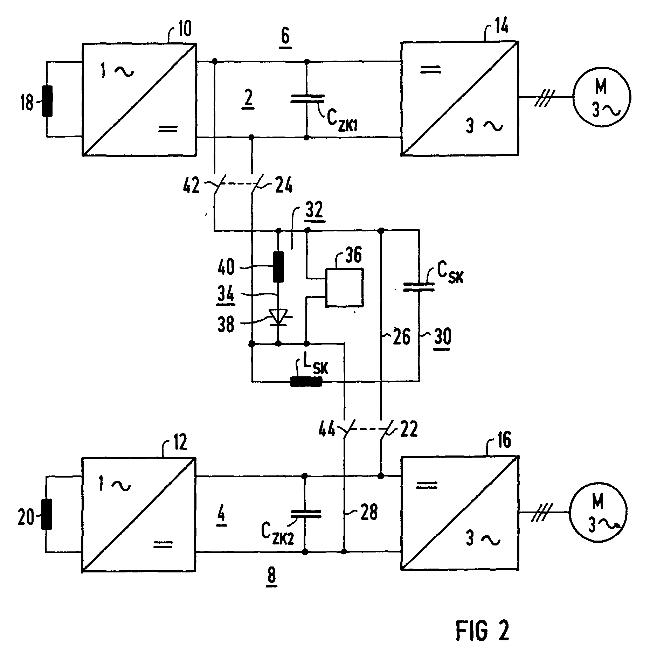

In der Figur 2 ist eine vorteilhafte Ausführungsform der Stromrichteranordnung nach Figur 1 dargestellt. Im Unterschied zur Ausführungsform nach Figur 1 sind hier zwei weitere Schalter 42 und 44 vorgesehen. Der Schalter 42 ist in der Verbindungsleitung 26 zwischen dem Pluspol des Spannungs-Zwischenkreises 2 des Pulsumrichters 6 und der Schutz-, Überwachungs- und Sicherheitseinrichtung 32 angeordnet. Der Schalter 44 ist in der Verbindungsleitung 28 zwischen der Schutz-, Überwachungs- und Sicherheitseinrichtung 32 und dem Minuspol des Spannungs-Zwischenkreises 4 des Pulsumrichters 8 angeordnet. Die Schalter 24 und 42 bzw. 22 und 44 sind gemeinsam betätigbar.

Im Fehlerfall, beispielsweise im Pulsumrichter 6, werden die beiden Schalter 24 und 42 gemeinsam geöffnet. Dadurch liegt der Spannungs-Zwischenkreis 2 nicht mehr einpolig am Pluspol des Spannungs-Zwischenkreises 4 des intakten Pulsumrichters 8 an. Somit kann nicht nur ein Kurzschluß freigeschaltet werden, sondern auch ein Erdschluß.

Durch die erfindungsgemäße Kopplung zweier Spannungs-Zwischenkreise 2 und 4 einer Stromrichteranordnung werden nicht nur das Bauvolumen, das Gewicht und die Kosten des Traktions-Stromrichters wesentlich verringert, sondern es besteht auch die Möglichkeit, Erdschlüsse freischalten zu können, wobei nur zwei weitere Schalter 42 und 44 benötigt werden.

## Patentansprüche

1. Stromrichteranordnung mit zwei Pulsumrichtern (6,8), die jeweils eine Einspeiseschaltung (10,12), einen eine Kondensatorbatterie (C_{ZK1},C_{ZK2}) aufweisenden Spannungs-Zwischenkreis (2,4) und einen Pulswechselrichter (14,16) aufweisen, wobei die Plus- und Minuspole der beiden Spannungs-Zwischenkreise (2,4) jeweils über eine einen Schalter (22,24) aufweisende Verbindungsleitung (26,28) miteinander elektrisch leitend verbunden sind und wobei elektrisch parallel zu den Kondensatorbatterien (C_{ZK1},C_{ZK2}) ein einen Kondensator (C_{SK}) und eine dazu in Reihe geschaltete Induktivität (L_{SK}) aufweisender Saugkreis (30) angeordnet ist, **dadurch gekennzeichnet,** daß zwischen dem Pluspol des einen Spannungs-Zwischenkreises (2) und dem Minuspol des anderen Spannungs-Zwischenkreises (4) eine Schutz-, Überwachungs- und Sicherheitseinrichtung (32) angeordnet ist.

2. Stromrichteranordnung nach Anspruch 1, wobei zwischen dem Pluspol des einen Spannungs-Zwischenkreises (2) und der Schutz-, Überwachungs- und Sicherheitseinrichtung (32) und zwischen der Schutz-, Überwachungs- und Sicherheitseinrichtung (32) und dem Minuspol des anderen Spannungs-Zwischenkreises (4) jeweils ein Schalter (42,44) angeordnet ist, die zusammen mit den Schaltern (24,22) in den Verbindungsleitungen (28,26) der Pole der beiden Spannungs-Zwischenkreise (2, 4) betätigbar sind.

3. Stromrichteranordnung nach Anspruch 1 oder 2, wobei die Schutz-, Überwachungs- und Sicherheitseinrichtung (32) einen Kurzschließer (34), eine Erdschlußerfassungseinrichtung (36) und eine Betätigungseinrichtung für die Schalter (22,24,42, 44) aufweist.

4. Stromrichteranordnung nach Anspruch 1 oder 2, wobei als Schalter (22,24,42,44) jeweils ein Lasttrennschalter verwendet wird.
